# EUROPÄISCHE PATENTSCHRIFT

(11) **EP 1 107 933 B1**
(45) Veröffentlichungstag und Bekanntmachung des Hinweises auf die Patenterteilung: **02.05.2003**
(21) Anmeldenummer: 99936585.1
(22) Anmeldetag: 22.07.1999
(51) Int. Cl.: C02F 1/32, C02F 1/72, B01D 53/54

(54) **VERFAHREN ZUR BEHANDLUNG WÄSSRIGER, CYANIDHALTIGER FLÜSSIGKEITEN**
METHOD FOR PROCESSING AQUEOUS LIQUIDS CONTAINING CYANIDE
PROCEDE POUR TRAITER DES LIQUIDES AQUEUX RENFERMANT DES CYANURES

(30) Priorität: 28.07.1998 DE 19833900; 27.04.1999 DE 19919046
(43) Veröffentlichungstag der Anmeldung: 20.06.2001
(73) Patentinhaber: a.c.k. aqua concept GmbH Karlsruhe, 76189 Karlsruhe (DE)
(72) Erfinder: SOERENSEN, Martin, D-76359 Marxzell (DE); WECKENMANN, Jürgen, D-68163 Mannheim (DE)
(74) Vertreter: Patentanwälte , Ruff, Wilhelm, Beier, Dauster & Partner
(86) Internationale Anmeldenummer: EP9905225
(87) Internationale Veröffentlichungsnummer: WO00006498

(56) Entgegenhaltungen:
- DE-A- 19 600 774
- FR-A- 2 303 766
- NL-A- 8 902 466
- US-A- 5 238 581
- US-A- 5 573 676

## Beschreibung

### Anwendungsgebiet und Stand der Technik

Die Erfindung bezieht sich auf ein Verfahren zur Behandlung, vorzugsweise wässriger, cyanidhaltiger Flüssigkeiten.

Cyanverbindungen, insbesondere Cyanide, sind an zahlreichen technischen Prozessen beteiligt. Sie können dabei als Hilfsstoffe eingesetzt werden oder fallen als Wert- oder Abfallprodukte an.

Bei Flotationsvorgängen werden Cyanide als sog. Drückerstoffe eingesetzt. In der Cyanid-Laugerei werden Metalle, insbesondere Edelmetalle, durch Extraktion mit Cyaniden gewonnen. Dabei entstehen Metall-Cyanid-Komplexe, die durch Oxidation aufgeschlossen werden. Cyanidhaltige Flüssigkeiten fallen als Abwässer galvanotechnischer Betriebe an. Auch Stripperlösungen zur Entmetallisierung von Werkstückoberflächen sind oft cyanidbelastet. Zur Behandlung solcher cyanidhaltiger Flüssigkeiten werden verschiedene Verfahren eingesetzt. Ein bekanntes Entgiftungsverfahren ist das seit langem in der Galvanotechnik eingesetzte Chlorbleichlauge-Verfahren. Dabei werden durch Zugabe von großen Mengen an Chlorbleichlauge, insbesondere Natriumhypochlorid, zu der zu behandelnden Abwassercharge die Metallionen aus dem cyanidischen Komplex verdrängt und das Cyanid oxidiert. Nachteil dieses Verfahrens ist ein hoher Chlorbleichlaugeverbrauch, da diese Lauge in großem Überschuß zugegeben werden muß. Weiterhin können sich an Aktivkohle adsorbierbare organische Halogenverbindungen bilden, die mit dem Summenparameter AOX gemessen und bewertet werden. Ein weiterer Nachteil ist die mangelnde Verfahrenssicherheit dieses Prozesses, da dabei elementares Chlorgas entstehen kann. Noch ein Nachteil des Chlorbleichlaugeverfahrens ist der hohe Restmetallgehalt im behandelten Abwasser, weil die Chlorbleichlauge bei stark komplexierenden Metallionen, wie beispielsweise Nickel, die cyanidischen Komplexe nur sehr unvollständig spaltet. Außerdem ist das Chlorbleichlaugeverfahren nur in beschränktem Umfang automatisierbar.

Ein weiteres Verfahren zur Behandlung von Cyanidverbindungen, insbesondere cyanidischen Flüssigkeiten, ist die einfache UV-Oxidation. Bei diesem Verfahren wird die, die cyanidischen Metallkomplexe enthaltende Flüssigkeit bei relativ hohem pH-Wert (pH 9 bis pH 12) und unter Zugabe von Oxidationsmittel durch einen UV-Oxidationsreaktor geleitet, wobei OH-Radikale gebildet werden, die ihrerseits die freien und komplexen Cyanide oxidieren. Dadurch werden die Metallionen aus dem Cyanokomplex befreit und in einer nachfolgenden Stufe ausgefällt. Bei diesem Verfahren wird gegenüber dem Chlorbleichlaugeverfahren kein AOX gebildet, im Gegenteil, eventuell vorhandender AOX wird abgebaut. Ein Nachteil der einfachen UV-Oxidation ist jedoch der hohe Verbrauch an Wasserstoffperoxid, da sich dieses bei dem relativ hohen pH-Wert zersetzt. Weiterhin bietet dieses Verfahren, insbesondere bei hochkonzentrierten Lösungen, nur eine geringe Verfahrenssicherheit, da die geringen Cyanid-Grenzwerte oftmals nicht eingehalten werden können. Die freien und komplexen Cyanide stehen in einem thermodynamischen Gleichgewicht, das u.a. konzentrationsabhängig aber auch abhängig vom pH-Wert ist. Sind die freien Cyanide erst einmal oxidiert, was relativ leicht und schnell abläuft, müssen die noch verbliebenen komplexen Cyanide weiter oxidiert werden. Das ist bei hohem pH-Wert häufig möglich, weil beispielsweise die Cyanidkonzentration hoch ist oder das Zentralion des Komplexes eine sehr stabile Verbindung mit den Liganden bildet. Dadurch verbleiben komplexe Cyanide in der Lösung, für die es zwar keinen Grenzwert gibt, aber die wegen des Gleichgewichts mit den freien Cyaniden freie Cyanide aus dem Komplex in die Lösung freisetzen. Das hat die oft beobachtete Folge, daß bei der einfachen UV-Oxidation eine behandelte Charge zurückbleibt, die kurz nach Behandlungsende den Grenzwert zwar einhält, aber bereits kurze Zeit später den Grenzwert wieder überschreitet. Weiterhin fallen bei diesem Verfahren hohe Energiekosten an, weil insbesondere die Komplexspaltung bei hohem pH-Wert langsam abläuft. Ein zusätzliches Problem ist die Belegung der UV-Strahlerschutzrohre mit Metallhydroxiden, da diese im Verlauf des Prozesses bei dem erhöhten pH-Wert auszufallen beginnen.

In der US-A-5 573 676 wird ein Verfahren zur Behandlung cyanidhaltiger Abwässer beschrieben. Die cyanidischen Abwässer werden dabei mit Wasserstoffperoxid versetzt und mit UV-Licht bestrahlt. Die Behandlung der Abwässer erfolgt dabei im alkalischen Bereich.

In der FR-A-2 303 766 wird ein Verfahren zur Aufbereitung von cyanid- oder phenolhaltigen Abwässern beschrieben. Die Aufbereitung erfolgt durch Zugabe von Peroxiden und die Bestrahlung mit UV-Licht. Der für die Zersetzung von Cyaniden genannte pH-Wert liegt dabei im alkalischen Bereich, insbesondere zwischen 9 und 10.

### Aufgabe und Lösung

Aufgabe der Erfindung ist es, die Nachteile des Standes der Technik mindestens teilweise zu vermeiden, vorzugsweise wässrige, cyanidhaltige Flüssigkeiten mit einer hohen Verfahrenssicherheit und niedrigen Kosten für Energie und Einsatzstoffe zu behandeln.

Diese Aufgabe wird durch das Verfahren mit den Merkmalen des Anspruchs 1 gelöst.

Bevorzugte Ausführungen des erfindungsgemäßen Verfahrens ergeben sich aus den abhängigen Ansprüchen 2 bis 18. Der Wortlaut sämtlicher Ansprüche wird hiermit durch Bezugnahme zum Inhalt dieser Beschreibung gemacht.

Cyanide können in Flüssigkeiten, insbesondere in wässrigen Flüssigkeiten, als freie Cyanide oder als komplexe Cyanide, beispielsweise Kaliumcyanid oder gelbes Blutlaugensalz, vorliegen. Insbesondere Alkali-Cyanide und Erdalkali-Cyanide, die als freie Cyanide in wässrigen Flüssigkeiten vorliegen können, sind sehr giftig. So liegt ihr MAK-Wert bei maximal 5 mg/m³. Bei dem erfindungsgemäß gewählten pH-Wert im sauren Milieu können sowohl die freien, als auch die komplexen Cyanide vollständig oxidiert werden. Eine vollständige Oxidation, insbesondere der komplexen Cyanide war seither, bei einem pH-Wert der cyanidischen Flüssigkeit von > 9, nicht möglich. Die in der Flüssigkeit verbliebenen komplexen Cyanide setzten über das thermodynamische Gleichgewicht mit den freien Cyaniden giftige freie Cyanide frei.

Die wässrige, cyanidhaltige Flüssigkeit wird außerdem mit mindestens einem Oxidationsmittel, vorzugsweise einem Peroxid, beispielsweise Wasserstoffperoxid, versetzt. Das Oxidationsmittel baut in einer Reaktion die freien und komplexen cyanide in der Flüssigkeit ab. Hierbei wird die cyanidische, wässrige Flüssigkeit mit UV-Licht bestrahlt. Das UV-Licht dient dabei zur Initiierung des intra-komplexen Schrittes einer Cyanidabbaureaktion. Es kann UV-Licht mit einer Wellenlänge von 153 nm bis 405 nm, d.h. aus dem gesamten UV-Spektrum, eingesetzt werden. Vorzugsweise wird aber energiereiches UV-B-Licht, der Wellenlänge von 280 nm bis 320 nm oder UV-C-Licht, der Wellenlänge von 200 nm bis 280 nm, eingesetzt. Werden röhrenartige oder allgemein langgestreckte UV-Lampen eingesetzt, können als Maß für eine Energiedichte vorzugsweise von 100 bis 200 W/cm Lampenlänge abgestrahlt werden.

Besonders vorteilhaft ist es, die wässrige, cyanidhaltige Flüssigkeit bei einem pH-Wert von < 6,5, insbesondere von ≤ 3 mit dem Oxidationsmittel zu versetzen. In diesem pH-Wert-Bereich ist das Oxidationsmittel, insbesondere Wasserperoxid, stabil, d.h. es kann nicht durch parallel ablaufende Reaktionen, beispielsweise eine Säure-Base-Reaktion, zersetzt werden. Dadurch kann bei der Behandlung der wässrigen, cyanidhaltigen Flüssigkeit Oxidationsmittel eingespart werden.

Es ist vorteilhaft, die bei der Behandlung entstehenden gasförmigen Produkte mindestens einer Nachbehandlung zu unterziehen, vorzugsweise an/in einem Sorptionsmittel zu sorbieren. Die bei der Behandlung wässriger cyanidhaltiger Flüssigkeiten entstehenden gasförmigen Produkte sind insbesondere Kohlendioxid, Sauerstoff und Cyanwasserstoff. Bei niedrigem pH-Wert, insbesondere im sauren Bereich, kann dabei mehr Cyanwasserstoff gebildet werden, als bei einem hohen pH-Wert, insbesondere im alkalischen Bereich.

Grundsätzlich ist es möglich, die Konzentration der (störenden) gasförmigen Produkte durch Zumischen von Luft oder anderen Gasen herabzusetzen, um beispielsweise auf diese Weise vorgeschriebene Grenzwerte einzuhalten. Entstandene gasförmige Produkte, insbesondere Cyanwasserstoff, können aber vorzugsweise durch Absorptions- oder Adsorptionsverfahren nachbehandelt werden. Ebenfalls möglich ist eine thermische oder eine katalytische Nachverbrennung (vorzugsweise an Luft) der gasförmigen Produkte, beispielsweise an einem Platin- oder einem Mischoxidkatalysator in einem Fest- oder Wirbelbettreaktor. Ein solcher Katalysator kann beispielsweise während der Behandlungsdauer der Flüssigkeit auf seiner Betriebstemperatur gehalten werden (z.B. durch elektrische Beheizung), so daß entstehende gasförmige Produkte, insbesondere Cyanwasserstoff, jederzeit katalytisch zerstört werden.

Die gasförmigen Produkte, insbesondere der Cyanwasserstoff, können vorteilhaft durch einen Waschvorgang, beispielsweise einer Absorption durch Sprühwäsche in einem Venturi-Wäscher, behandelt werden. Für den Waschvorgang können Waschlösungen, insbesondere eine wässrige Waschlösung, eingesetzt werden. Besonders bevorzugt ist eine Waschlösung, die mindestens ein Oxidationsmittel enthält, wobei es sich vorzugsweise bei dem Oxidationsmittel um ein Peroxid, insbesondere um Wasserstoffperoxid, handeln kann. Als Oxidationsmittel können auch Peroxo-Verbindungen eingesetzt werden. Die Waschlösung kann eine alkalische Lösung sein, die beispielsweise den Cyanwasserstoff durch eine Säurebasereaktion neutralisiert.

Bei einem Gaswaschverfahren tritt die Reinigungswirkung durch eine Relativbewegung zwischen Gas und Flüssigkeit ein. Der Waschvorgang kann prinzipiell im Gleich-, Gegen- oder Kreuzstromverfahren, insbesondere im Gegenstromverfahren, durchgeführt werden. Durch die Einbindung der Nachbehandlung in das Gesamtverfahren kann eine Absenkung des pH-Wertes gefahrlos vorgenommen werden, wie später noch erläutert wird.

Die cyanidhaltige, wässrige Flüssigkeit wird bei der Erfindung einer Vorbehandlung unterzogen , bei der sie bei einem pH-Wert von > etwa 9, insbesondere bei einem pH-Wert zwischen 9 und 12, mit mindestens einem Oxidationsmittel versetzt wird. Durch die Vorbehandlung werden insbesondere die freien Cyanide in der Flüssigkeit oxidiert. Zusätzlich kann die Flüssigkeit bei der Vorbehandlung mit UV-Licht bestrahlt werden. Dadurch kann die radikalische Reaktion initiiert und damit die Oxidation verbessert werden.

Auch hier ist es besonders vorteilhaft, als Oxidationsmittel ein Peroxid, insbesondere Wasserstoffperoxid, einzusetzen. Das Oxidationsmittel kann in einer Lösung, insbesondere in einer wässrigen Lösung, zugegeben werden. Als Lösung kann vorzugsweise die bei der Nachbehandlung eingesetzte Waschlösung verwendet werden.

Das Behandlungsverfahren für die wässrigen, cyanidischen Flüssigkeiten kann kontinuierlich oder diskontinuierlich durchgeführt werden. Bei einem diskontinuierlichen Verfahren kann beispielsweise der Inhalt einer einzelnen Charge behandelt werden. Ist das Behandlungsziel erreicht, kann die Charge gegen eine andere ausgetauscht werden. Bei einem kontinuierlichen Verfahren kann beispielsweise wässrige, cyanidhaltige Flüssigkeit über eine Kaskade von Behältern, stufenweise gereinigt werden. Die belastete Flüssigkeit kann an der höchsten Stelle der Kaskade eintreten und behandelt, insbesondere von den Cyaniden befreit, an der tiefsten Stelle der Kaskade austreten. Weiterhin ist es möglich, sowohl das diskontinuierliche als auch das kontinuierliche Verfahren als Kreislaufverfahren auszuführen. Die Flüssigkeit kann in einem Behälter mit dem Oxidationsmittel versetzt und dann, insbesondere mit Hilfe einer Pumpe, im Kreislauf durch eine UV-Bestrahlungseinrichtung hindurch wieder in den Behälter geführt werden.

Besonders vorteilhaft ist es, wichtige Bestandteile der entstehenden gasförmigen Produkte, insbesondere die Gase Cyanwasserstoff, Sauerstoff und/oder Kohlendioxid, zu bestimmen, wobei vorzugsweise diese Bestimmung während der Behandlung kontinuierlich (in-situ) erfolgt. Die Bestandteile der entstehenden gasförmigen Produkte können durch verschiedene Meßverfahren bestimmt werden. Als Meßverfahren kommen beispielsweise Gaschromatographie, Flammenionisationsdetektion, Atomabsorptionsspektroskopie oder Flammenspektroskopie in Frage. Es ist auch bevorzugt, Messungen vor Beginn der Nachbehandlung und/oder nach Beendigung der Nachbehandlung vorzunehmen.

Besonders bevorzugt ist es, eine mit der Behandlung verbundene Schaumbildung mindestens teilweise zu verhindern und/oder gebildeten Schaum mindestens teilweise zu zerstören. Die Schaumbildung kann dabei mechanisch oder chemisch verhindert, der gebildete Schaum mechanisch oder chemisch zerstört werden. Der Schaum kann chemisch durch Zugabe von schaumbildungshemmenden Stoffen zerstört werden. Für die mechanische Zerstörung kann in einem die Flüssigkeit aufnehmenden Behälter eine Abtrenneinrichtung, insbesondere eine Abtrennung nach Art eines Zwischenbodens vorgesehen werden. Auf oder an dieser Abtrennung kann zusätzlich mit einer Flüssigkeit wie Wasser, die ggf. zusätzlich einen chemischen Schaumzerstörer (Entschäumer) enthält, gespült werden. Diese Flüssigkeit kann mit Hilfe von Düsen aufgebracht, vorzugsweise aufgesprüht werden. Es ist auch die Rückführung der Flüssigkeit durch eine Pumpe möglich, um dadurch den chemischen Schaumzerstörer effektiv einsetzen zu können.

Das erfindungsgemäße Verfahren kann mit der im folgenden beschriebenen Vorrichtung durchgeführt werden. Dies ist eine Vorrichtung zur Behandlung, vorzugsweise wässriger, cyanidhaltiger Flüssigkeiten, mit einem Behälter zur Aufnahme der Flüssigkeit, einer UV-Behandlungseinrichtung und einer Einrichtung zur Sorption von bei der Behandlung entstehenden gasförmigen Produkten, insbesondere einem Wäscher. Außerdem ist eine Einrichtung zur Verhinderung einer Schaumbildung oder zur Zerstörung gebildeten Schaumes vorgesehen, die eine im Behälter oberhalb des Flüssigkeitsspiegels angeordnete Abtrenneinrichtung beispielsweise ein Zwischenboden sein kann. Der Behälter kann ein Chargenbehälter, insbesondere ein Tank, sein. Zur Behandlung der Flüssigkeit mit UV-Licht wird eine UV-Behandlungseinrichtung, insbesondere ein UV-Oxidationsreaktor, verwendet. Für die sorptive Behandlung entstehender gasförmiger Produkte kann ein Wäscher, beispielsweise ein Venturi-Wäscher oder ein Sprühturm, eingesetzt werden.

Bevorzugt sind weitere Einrichtungen, insbesondere mindestens eine Pumpe und Leitungen vorgesehen, die vorzugsweise derart angeordnet sind, daß das Behandlungsverfahren mindestens teilweise als Kreislaufverfahren durchführbar ist. An den Einrichtungen, insbesondere an der Pumpe und an den Leitungen, können verschiedene Regelorgane, insbesondere Ventile oder Schieber, angebracht sein. Die Pumpe kann die wässrige, cyanidhaltige Flüssigkeit umwälzen und sie beispielsweise durch die UV-Behandlungseinrichtung drücken. Weiterhin können gasförmige Produkte durch eine weitere Pumpe, insbesondere eine Vakuumpumpe, abgezogen und beispielsweise durch die Sorptionseinrichtung, insbesondere den Wäscher, geleitet werden.

Besonders vorteilhaft ist es, an der Sorptionseinrichtung mindestens eine Entlüftung, insbesondere eine Zwangsentlüftung, vorzusehen. Die Zwangsentlüftung kann bei einem bestimmten Maximaldruck auslösen.

Vorteilhaft ist es, Meßeinrichtungen zur Bestimmung wichtiger Bestandteile der gasförmigen Produkte so anzuordnen, daß sie vorzugsweise der Eintrittsöffnung und/oder der Austrittsöffnung der Sorptionseinrichtung zugeordnet sind.

Durch das erfindungsgemäße Verfahren kann eine hohe Verfahrenssicherheit erreicht werden, da die Cyanide, insbesondere die komplex gebundenen Cyanide, in diesem schwach alkalischen bis sauren Milieu vollständig gespalten werden. Gleichzeitig werden die Nachteile des Standes der Technik vermieden. So wird beispielsweise die notwendige Energie zum Betrieb der UV-Strahler minimiert, es bilden sich keine an Aktivkohle adsorbierbare organische Halogenverbindungen, der Verbrauch an Oxidationsmittel ist reduziert und die Strahlerschutzrohre werden nicht mit Metallhydroxiden belegt. Schließlich ist der Gesamtprozess, insbesondere bei Einsatz der beschriebenen Vorrichtung weitgehend automatisierbar.

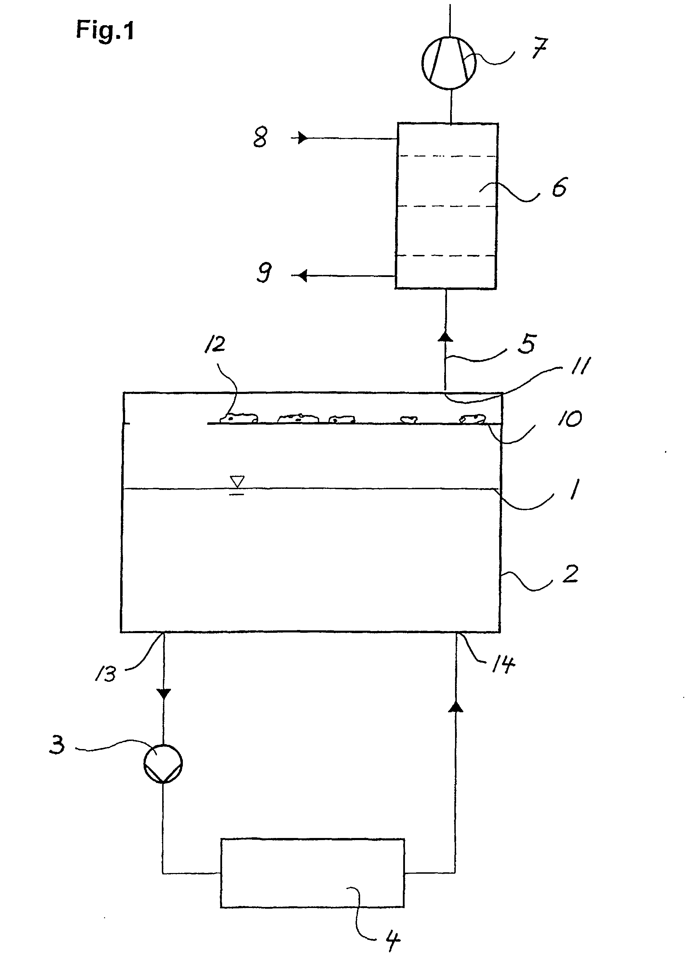

Diese und weitere Merkmale der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung verwirklicht sein können. Ein Ausführungsbeispiel der Erfindung ist in der Zeichnung dargestellt und wird im folgenden näher erläutert.

### Beschreibung des bevorzugten Ausführungsbeispiels

Eine bevorzugte Ausführungsform des erfindungsgemäßen Verfahrens und der dabei verwendeten Vorrichtung wird mit Bezugnahme auf die Zeichnung detailliert beschrieben.

Die Zeichnung ist eine schematische Darstellung einer bevorzugten Ausführungsform der verwendeten Vorrichtung.

Die Vorrichtung besteht aus einem Chargenbehälter 2, einer Pumpe 3, einem UV-Oxidationsreaktor 4, Leitungen 5, einem Gaswäscher 6, einer Gaspumpe 7 und einem Zwischenboden 10.

Der Chargenbehälter 2 ist beispielsweise ein zylindrischer Druckbehälter. In ihm wird die wässrige, cyanidhaltige Flüssigkeit 1 vorgelegt. Der Füllstand des Behälters richtet sich nach der Lage eines Zwischenbodens 10 im Behälter. Der Flüssigkeitsspiegel liegt vorzugsweise stets unterhalb des Zwischenbodens 10. An seiner Oberseite besitzt der Chargen behälter 2 einen Gasaustritt 11. An der Unterseite des Chargenbehälters 2 befinden sich ein Flüssigkeitsaustritt 13 und ein Flüssigkeitseintritt 14. Die wässrige, cyanidhaltige Flüssigkeit 1 wird über eine Pumpe 3 aus dem Chargenbehälter 2 gesaugt.

Die Pumpe 3 befindet sich in einer Leitung 5, die vom Chargenbehälter 2 zum UV-Oxidationsreaktor 4 führt. Sie drückt die angesaugte Flüssigkeit 1 in den UV-Oxidationsreaktor. Die Pumpe 3 ist so ausgeführt, daß sie druckseitig einen hohen Arbeitsdruck erzeugt, da druckseitig ein hoher Druckverlust, beispielsweise durch den UV-Oxidationsreaktor, auftritt.

Der UV-Oxidationsreaktor liegt zwischen Pumpe 3 und Flüssigkeitseintritt 14. Er hat für die Flüssigkeit 1 eine Einlaßund eine Auslaßöffnung. Er ist beispielsweise als Rohrreaktor ausgebildet. Die Flüssigkeit 1 fließt durch den UV-Oxidationsreaktor 4 und wird am Flüssigkeitseintritt 14 dem Chargenbehälter 2 wieder zugeführt.

Der Gaswäscher 6 ist im dargestellten Fall eine Rieselkolonne. Er hat mehrere übereinanderliegende, für Waschflüssigkeit durchlässige Böden. Die Böden können beispielsweise als Siebböden ausgebildet sein. Der Gaswäscher ist über eine Leitung 5 mit dem Chargenbehälter 2 durch den Gasaustritt 11 verbunden. Er weist an seiner längeren Seite, beispielsweise an seiner Mantelfläche, eine Waschflüssigkeits-Eintrittsöffnung 8 und eine Waschflüssigkeits-Austrittsöffnung 9 auf. Am Kopfende ist der Gaswäscher 6 durch eine nicht näher bezeichnete Gasaustrittsöffnung und eine Leitung 5 mit einer Gaspumpe 7 verbunden.

Die Gaspumpe ist so ausgelegt, daß sie saugseitig einen hohen Druckverlust überwinden kann.

Der Zwischenboden 12 ist im Gasraum des Chargenbehälters 2 angeordnet. Er ist beispielsweise aus Stahlblech angefertigt und an der Behälterwand des Chargenbehälters befestigt. Er kann sich kreisscheibenförmig über den gesamten Innenraum des Chargenbehälters spannen. Unweit der Behälterwand weist der Zwischenboden 10 eine nicht näher bezeichnete Öffnung auf, durch die entstehende gasförmige Produkte vom Gasraum unterhalb des Zwischenbodens 10 zum Gasaustritt 11 gelangen können.

Mit der vorausgehend beschriebenen Vorrichtung kann das folgende erfindungsgemäße Verfahren durchgeführt werden.

### a) Reinigung der wässrigen, cyanidhaltigen Flüssigkeit

Die im Chargenbehälter 2 vorgelegte Flüssigkeit 1 ist/wird mit Oxidationsmittel versetzt und besitzt einen pH-Wert > 9 (zur Vorbehandlung) oder einen pH-Wert, der im Bereich des sauren Milieus liegt (Behandlung) bzw. wird auf solche pH-Werte eingestellt. Diese Flüssigkeit 1 wird durch die Pumpe 3 aus dem Chargenbehälter 2 am Flüssigkeitsaustritt 13 abgezogen und über die Pumpe 3 in den UV-Oxidationsreaktor 4 gedrückt. Die Flüssigkeit 1 tritt durch den UV-Oxidationsreaktor 4 hindurch und wird dabei mit UV-Licht bestrahlt. Das zur Flüssigkeit 1 hinzugegebene Oxidationsmittel, beispielsweise Wasserstoffperoxid reagiert unter Bestrahlung mit UV-Licht mit den Cyaniden in der Flüssigkeit. Die gereinigte Flüssigkeit 1 tritt am Flüssigkeitseintritt 14 wieder in den Chargenbehälter 2 ein. Der Vorgang kann mehrmals wiederholt werden. Unter Umständen kann die Vorbehandlung bei hohem pH-Wert auch ohne UV-Bestrahlung durchgeführt werden.

Nach dem Abarbeiten der freien Cyanide bei relativ hohem pH-Wert (Vorbehandlung), wird der pH-Wert, vorzugsweise stufenweise, abgesenkt und der UV-Prozeß wird angefahren oder fortgeführt. Der Prozeß wird so lange fortgeführt, bis alle Cyanide in der Flüssigkeit 1 oxidiert sind bzw. vorgegebene Grenzkonzentrationen erreicht sind.

### b) Sorptionsvorgang

Entstehende Gase, insbesondere Cyanwasserstoff, werden durch die Gaspumpe 7 aus dem Gasraum des Chargenbehälters 2 über die Öffnung des Zwischenbodens 10 in den Gaswäscher 6 gesaugt. Dort werden die entstandenen Gase durch eine Waschflüssigkeit absorbiert. Die Waschflüssigkeit tritt am Kopf des Gaswäschers ein und rieselt über Böden in den Sumpf des Gaswäschers 6. Die Gase werden somit in einem Gegenstromverfahren ausgewaschen.

### c) Verhinderung von Schaumbildung oder Zerstörung von Schaum

Der Zwischenboden 10 trennt die Flüssigkeit 1 vom Gasaustritt 11. Auf diesem Zwischenboden wird eventuell entstehender Schaum 12 mechanisch zurückgehalten bzw. niedergeschlagen und bleibt an der Oberseite des Zwischenbodens 10 hängen. Der Schaum 12 kann dann durch die Gasströmung, die durch die Pumpe 7 verzweigt wird, zerstört werden.

## Patentansprüche

1. Verfahren zur Behandlung, vorzugsweise wässriger, cyanidhaltiger Flüssigkeiten, bei dem die Flüssigkeit bei einem pH-Wert von < etwa 9 mit mindestens einem Oxidationsmittel versetzt und mit UV-Licht bestrahlt wird, und bei dem die Flüssigkeit einer Vorbehandlung unterzogen wird, bei der sie bei einem pH-Wert von > etwa 9, insbesondere bei einem pH-Wert zwischen 9 und 12, mit mindestens einem Oxidationsmittel versetzt wird.

2. Verfahren nach Anspruch 1, **dadurch gekennzeichnet, dass** bei der Behandlung entstehende gasförmige Produkte mindestens einer Nachbehandlung unterworfen werden, vorzugsweise an/in einem Sorptionsmittel sorbiert werden.

3. Verfahren nach Anspruch 2, **dadurch gekennzeichnet, dass** es sich bei der Nachbehandlung um einen Waschvorgang handelt, wobei vorzugsweise die gasförmigen Produkte mit einer Waschlösung, insbesondere einer wässrigen Waschlösung, behandelt werden.

4. Verfahren nach Anspruch 3, **dadurch gekennzeichnet, dass** die Waschlösung mindestens ein Oxidationsmittel enthält, wobei es sich vorzugsweise bei dem Oxidationsmittel um ein Peroxid, insbesondere um Wasserstoffperoxid, handelt.

5. Verfahren nach Anspruch 3 oder Anspruch 4, **dadurch gekennzeichnet, dass** es sich bei der Waschlösung um eine alkalische Lösung handelt.

6. Verfahren nach einem der Ansprüche 2 bis 5, **dadurch gekennzeichnet, dass** die Nachbehandlung, insbesondere der Waschvorgang im Gegenstromverfahren durchgeführt wird.

7. Verfahren nach einem der vorhergehenden Ansprüche, **dadurch gekennzeichnet, dass** die Flüssigkeit bei einem pH-Wert von < 6,5, insbesondere von < 3, mit dem Oxidationsmittel versetzt wird.

8. Verfahren nach einem der vorhergehenden Ansprüche, **dadurch gekennzeichnet, dass** die Flüssigkeit bei der Vorbehandlung mit UV-Licht bestrahlt wird.

9. Verfahren nach einem der vorhergehenden Ansprüche, **dadurch gekennzeichnet, dass** es sich bei dem zugesetzten Oxidationsmittel um mindestens ein Peroxid, insbesondere um Wasserstoffperoxid, handelt.

10. Verfahren nach Anspruch 9, **dadurch gekennzeichnet, dass** das Oxidationsmittel in einer Lösung, insbesondere in einer wässrigen Lösung, zugegeben wird.

11. Verfahren nach Anspruch 10, **dadurch gekennzeichnet, dass** es sich bei der Lösung um die bei der Nachbehandlung verwendete Waschlösung handelt.

12. Verfahren nach einem der vorhergehenden Ansprüche, **dadurch gekennzeichnet, dass** das Verfahren als Kreislaufverfahren durchgeführt wird, wobei vorzugsweise die Flüssigkeit in einem Behälter mit dem Oxidationsmittel versetzt und dann, insbesondere mit Hilfe einer Pumpe, im Kreislauf durch eine UV-Bestrahlungseinrichtung hindurch wieder in den Behälter geführt wird.

13. Verfahren nach einem der vorhergehenden Ansprüche, **dadurch gekennzeichnet, dass** wichtige Bestandteile der entstehenden gasförmigen Produkte, insbesondere die Gase Cyanwasserstoff, Sauerstoff und/oder Kohlendioxid, bestimmt werden, wobei vorzugsweise diese Bestimmung während der Behandlung kontinuierlich erfolgt.

14. Verfahren nach Anspruch 13, **dadurch gekennzeichnet, dass** die Bestimmung vor Beginn der Nachbehandlung und/oder nach Beendigung der Nachbehandlung erfolgt.

15. Verfahren nach einem der vorhergehenden Ansprüche, **dadurch gekennzeichnet, dass** eine mit der Behandlung verbundene Schaumbildung mindestens teilweise verhindert und/oder gebildeter Schaum mindestens teilweise zerstört wird.

16. Verfahren nach Anspruch 15, **dadurch gekennzeichnet, dass** die Schaumbildung chemisch verhindert oder gebildeter Schaum chemisch zerstört wird.

17. Verfahren nach Anspruch 15, **dadurch gekennzeichnet, dass** die Schaumbildung mechanisch verhindert oder gebildeter Schaum mechanisch zerstört wird.

18. Verfahren nach Anspruch 17, **dadurch gekennzeichnet, dass** in einem die Flüssigkeit aufnehmenden Behälter eine Abtrenneinrichtung, insbesondere eine Abtrennung nach Art eines Zwischenbodens, vorgesehen ist.

## Claims

1. A method for treating liquids, preferably aqueous liquids containing cyanide, under which the liquid is admixed with at least one oxidizer at a pH of less than about 9 and irradiated with UV-light, and under which the liquid is subjected to a pretreatment, under which it is admixed with at least one oxidizer at a pH exceeding about 9, in particular, a pH ranging from 9 to 12.

2. A method according to claim 1, wherein gaseous products arising during treatment are subjected to at least one post-treatment, preferably sorbed on/in a sorptive medium.

3. A method according to claim 2, wherein the post-treatment is a scrubbing process, where, preferably, the gaseous products are treated with a scrubbing solution, in particular, an aqueous scrubbing solution.

4. A method according to claim 3, wherein the scrubbing solution contains at least one oxidizer, where the oxidizer is preferably a peroxide, in particular, hydrogen peroxide.

5. A method according to claim 3 or claim 4, wherein the scrubbing solution is an alkaline solution.

6. A method according to any of claims 2 - 5, wherein the post-treatment, in particular, the scrubbing process, is performed in a counterflow mode.

7. A method according to any of the foregoing claims, wherein the liquid is admixed with the oxidizer at a pH of less than about 6.5, in particular, a pH less than 3.

8. A method according to any of the foregoing claims, wherein the liquid is irradiated with UV-light in conjunction with the pre-treatment.

9. A method according to any of the foregoing claims, wherein the admixed oxidizer consists of at least one peroxide, in particular, hydrogen peroxide.

10. A method according to claim 9, wherein the oxidizer is added to a solution, in particular, to an aqueous solution.

11. A method according to claim 10, wherein the solution is the scrubbing solution employed under the post-treatment.

12. A method according to any of the foregoing claims, wherein the method is performed in a closed-circuit process, where, preferably, the liquid is admixed with the oxidizer in a vessel and then circulated through a UV-irradiation device and back to the vessel, preferably using a pump.

13. A method according to any of the foregoing claims, wherein the major constituents of the gaseous products that arise, in particular, the gases hydrogen cyanide, oxygen, and/or carbon dioxide, are detected, where their detection preferably takes place continually during treatment.

14. A method according to claim 13, wherein detection takes place prior to commencement of the treatment and/or following conclusion of the post-treatment.

15. A method according to any of the foregoing claims, wherein foaming that occurs in conjunction with the treatment is at least partially prevented and/or any foam that forms is at least partially destroyed.

16. A method according to claim 15, wherein foaming is chemically inhibited or any foam that forms is chemically destroyed.

17. A method according to claim 15, wherein foaming is mechanically prevented or any foam that forms is mechanically destroyed.

18. A method according to claim 17, wherein a separation device, in particular, a partition similar to a false bottom, is provided in a vessel accommodating the liquid.

## Revendications

1. Procédé de traitement de liquides, de préférence aqueux et contenant du cyanure, par lequel le liquide est, pour un pH < 9 env., mélangé avec au moins un agent d'oxydation et exposé à une lumière UV, et par lequel le liquide est soumis à un traitement préalable au cours duquel il est, pour un pH > 9 env., en particulier pour un pH compris entre 9 et 12, mélangé avec au moins un agent d'oxydation.

2. Procédé, selon la revendication 1, **caractérisé par le fait que** les produits sous forme gazeuse résultant du traitement sont soumis à au moins un post-traitement, et adsorbés, de préférence sur/dans un agent de sorption.

3. Procédé selon la revendication 2, **caractérisé par le fait qu'**il s'agit, pour le post-traitement d'un processus de lavage au cours duquel les produits sous forme gazeuse de préférence, sont traités avec une solution de lavage, en particulier une solution de lavage aqueuse.

4. Procédé selon la revendication 3, **caractérisé par le fait que** la solution de lavage contient au moins un agent d'oxydation, et qu'il s'agit de préférence pour l'agent d'oxydation de peroxyde, en particulier de peroxyde d'hydrogène.

5. Procédé selon la revendication 3 ou 4, **caractérisé par le fait que** pour la solution de lavage, il s'agit une solution alcaline.

6. Procédé selon l'une des revendications 2 à 5, **caractérisé par le fait que** pour le post-traitement, le processus de lavage en particulier est exécuté dans un processus à contre-courant.

7. Procédé selon l'une des revendications ci-dessus, **caractérisé par le fait que** le liquide avec un pH < 6,5, en particulier < 3, est mélangé avec l'agent d'oxydation.

8. Procédé selon l'une des revendications ci-dessus, **caractérisé par le fait que** le liquide est exposé à une lumière UV lors du traitement préalable.

9. Procédé selon l'une des revendications ci-dessus, **caractérisé par le fait que** pour l'agent d'oxydation utilisé, il s'agit au moins de peroxyde, en particulier de peroxyde d'hydrogène.

10. Procédé selon la revendication 9, **caractérisé par le fait que** l'agent d'oxydation est ajouté à une solution, en particulier à une solution aqueuse.

11. Procédé selon la revendication 10, **caractérisé par le fait que** pour la solution il s'agit de la solution de lavage utilisée pour le post-traitement.

12. Procédé selon l'une des revendications ci-dessus, **caractérisé par le fait que** le procédé est exécuté en circuit fermé, au cours duquel le liquide de préférence, est mélangé dans un réservoir avec l'agent d'oxydation, et ensuite, en particulier à l'aide d'une pompe, est ramené dans le circuit en traversant un dispositif d'exposition à la lumière UV pour retourner au réservoir.

13. Procédé selon l'une des revendications ci-dessus, **caractérisé par le fait que** des composants essentiels des produits gazeux générés, en particulier les gaz hydrogène cyanuré, oxygène et/ou dioxyde de carbone sont dosés, ce dosage s'effectuant en continu, de préférence pendant le traitement.

14. Procédé selon la revendication 13, **caractérisé par le fait que** le dosage s'effectue avant le début du post-traitement et/ou à l'issue du post-traitement.

15. Procédé selon l'une des revendications ci-dessus, **caractérisé par le fait que** la formation de mousse associée au traitement est au moins partiellement inhibée et/ou la mousse formée est au moins partiellement détruite.

16. Procédé selon la revendication 15, **caractérisé par le fait que** la formation de mousse est inhibée chimiquement ou que la mousse formée est détruite chimiquement.

17. Procédé selon la revendication 15, **caractérisé par le fait que** la formation de la mousse est inhibée mécaniquement ou que la mousse formée est détruite mécaniquement.

18. Procédé selon la revendication 17, **caractérisé par le fait que** dans le réservoir recevant le liquide est prévu un dispositif de séparation, en particulier une séparation de type fond intermédiaire.
